Europäisches Patentamt

European Patent Office

Office européen des brevets

(19)

(11) Veröffentlichungsnummer: **0 046 822**
**B1**

(12) **EUROPÄISCHE PATENTSCHRIFT**

(45) Veröffentlichungstag der Patentschrift:
**24.08.88**

(51) Int. Cl.⁴: **B 29 C 41/04,** E 04 H 12/22

(21) Anmeldenummer: **80106555.8**

(22) Anmeldetag: **25.10.80**

(54) **Verfahren zum Befestigen einer Fussplatte an einem im Schleuderverfahren hergestellten Mast und Fussplatte zur Durchführung des Verfahrens.**

(30) Priorität: **29.08.80 DE 3032575**

(43) Veröffentlichungstag der Anmeldung:
**10.03.82 Patentblatt 82/10**

(45) Bekanntmachung des Hinweises auf die Patenterteilung:
**24.08.88 Patentblatt 88/34**

(84) Benannte Vertragsstaaten:
**AT BE CH FR GB LI NL SE**

(56) Entgegenhaltungen:
**AU - B - 512 635**
**FR - A - 1 085 849**
**FR - A - 1 490 089**
**FR - A - 2 147 813**
**FR - A - 2 197 711**
**US - A - 3 989 787**

(73) Patentinhaber: **G.A. Pfleiderer GmbH & Co KG,**
**D-8430 Neumarkt (DE)**

(72) Erfinder: **Rother, Bruno, Dr.-Eberle-Strasse 38,**
**D-8430 Neumarkt (DE)**
Erfinder: **Trommen, Hartmut, Bayernstrasse 15a,**
**D-8431 Postbauer-Heng (DE)**

(74) Vertreter: **Patentanwälte Czowalla . Matschkur +**
**Partner,**
**Dr.-Kurt-Schumacher-Strasse 23 Postfach 9109,**
**D-8500 Nürnberg 11 (DE)**

ACTORUM AG

## Beschreibung

Die Erfindung richtet sich auf ein Schleuderverfahren zum Herstellen eines Mastes aus armiertem Kunststoff in einer um ihre horizontale Achse drehbaren Form, an deren dem Mastfuss entsprechenden Ende eine Fussplatte mit einem koaxial in die Form eingreifenden Rohrstutzen befestigt ist.

Bei den bislang bekanntgewordenen Herstellungsverfahren werden in der Regel zunächst der Mast und die Fussplatte fertiggestellt, mittels welcher der Mast insbesondere auf Brücken oder Strassen befestigt wird, wobei ein nachträglicher Aufbruch bereits vorhandener Brücken – oder Strassenbeläge weitgehend vermieden wird. Erst in einem weiteren Arbeitsgang wird die in der Regel aus rostgeschütztem Werkstoff, beispielsweise verzinktem Stahl, bestehende Fussplatte mit ihrem Rohrstutzen in den Mastfuss eingesetzt und dort befestigt, im allgemeinen einlaminiert. Nachdem aufgrund dessen ein gesonderter Arbeitsgang erforderlich ist, ist die Herstellung derartiger Masten sehr aufwendig und verursacht infolgedessen hohe Kosten.

Bei einem bekannten, den Ausgangspunkt der Erfindung bildenden Schleuderverfahren gemäss der AU-PS 512 635 zur Herstellung eines zylindrischen Rohres aus armiertem Kunststoff ist eine Fussplatte an einer mit der Form starr verbundenen Antriebsscheibe angeschraubt. Ein an der Fussplatte angebrachter Rohrstutzen greift dabei koaxial in das Ende der Form ein, in welche bei Stillstand Kunstharz eingebracht wird. Dieses Kunstharz lagert sich sodann während der Rotation der Form sowohl an der Innenwand der Form als auch an der Innenwand des Rohrstutzens an. Nach Aushärtung des Kunstharzes wird die kraftschlüssige Verbindung zwischen Fussplatte und Form gelöst, woraufhin das fertiggestellte Rohr der Form entnommen werden kann. Als nachteilig bei einem auf diese Art und Weise hergestellten Rohr hat sich jedoch herausgestellt, dass aufgrund des Schwindens des aushärtenden Kunstharzes die Festigkeit der Verbindung zwischen dem Rohrende einerseits und dem Rohrstutzen der Fussplatte andererseits geschwächt ist. Da jedoch gerade diese Stelle des Rohres in der Hauptsache beansprucht wird, ist u.U. eine Beschädigung oder gar ein Bruch aufgrund der Schwächung bei höherer Biegebelastung die Folge.

Der Erfindung liegt daher die Aufgabe zugrunde, die Herstellung eines solchen mit einer Fussplatte versehen, im Schleuderverfahren erzeugten Mastes zu vereinfachen und zugleich die Befestigung zwischen Mastfuss und Fussplatte wirksam zu verbessern, wodurch sich insgesamt eine wesentlich grössere Wirtschaftlichkeit erzielen lässt. Zur Lösung dieser Aufgabe ist bei einem Schleuderverfahren der eingangs genannten Art erfindungsgemäss vorgesehen, dass eine das Kunstharz in die Form einsprühende Düse durch eine Öffnung der Fussplatte in die Form eingeführt und ein Zwischenraum zwischen dem Rohrstutzen und der Forminnenwand durch das eingesprühte Kunstharz ausgefüllt wird.

Durch eine derartige Ausgestaltung des Schleuderverfahrens zum Herstellen eines Mastes aus armiertem Kunststoff ist sichergestellt, dass das Kunstharz auch vom Mastfuss her in die Schleuderform eingesprüht werden kann, falls dies sich im Zusatz zum Einsprühen vom Mastzopf her als notwendig oder vorteilhaft erweist. Da des weiteren solche Maste in der Regel konisch zulaufen, also die Fussplatte an dem Ende des Mastes mit dem grössten Durchmesser angebracht werden muss, fliesst das in die Form eingesprühte Kunstharz am Innenmantel der Schleuderform entlang zum Mastfussende hin, wo es in den ringspaltähnlichen Zwischenraum zwischen zentrisch angeordneten Rohrstutzen und Forminnenwand gelangt. Durch die auftretenden Rotationskräfte ist darüber hinaus eine besondere Verdichtung möglich, so dass der Zwischenraum völlig mit Kunstharz ausgefüllt wird, was zu einer unlösbaren und zuverlässigen Befestigung zwischen Rohrstutzen der Fussplatte und Mast führt.

Die erfindungsgemässe Massnahme fasst somit den Herstellungsvorgang für den Mast selbst mit der Befestigung der Fussplatte an den Masten in einem ohnehin erforderlichen Arbeitsgang zusammen. Das Verfahren macht weiterhin eine gegebenenfalls erforderliche Nachbearbeitung der Stirnfläche des Mastfusses entbehrlich. Dieses Schleuderverfahren hat darüber hinaus den entscheidenden Vorteil, dass die Schleuderform für die Herstellung von Masten mit – ebenso wie ohne – Fussplatte Verwendung findet. So bedarf es gegenüber dem Herstellungsverfahren für Maste ohne Fussplatte keiner zusätzlichen apparativen Aufwendungen, mit Ausnahme eben der Befestigung der Fussplatte mit ihrem Rohrflansch an der Schleuderform.

Das erfindungsgemässe Verfahren eignet sich für die verschiedensten Schleuderverfahren, insbesondere auch für ein solches, bei welchem aus der Armierung eine für das Kunstharz durchlässige Matte mit einer formbeständigen Aussenfläche hergestellt wird, deren Länge und Breite etwa der Abwicklung der Form-Innenwald in eine Ebene entspricht, wobei dann die Matte in einem der Drehrichtung der Form entgegengesetzten Sinn auf ein Tragrohr aufgewickelt und mit diesem in die Form eingebracht und die Form kurzzeitig in Rotation versetzt und dabei die Matte von dem Tragrohr abgewickelt wird, so dass sie sich an die Formwand anlegt, worauf das leere Tragrohr entfernt wird und schliesslich dann von einem Ende der rotierenden Form aus das Kunstharz unter hohem Druck durch eine Düse in die Form eingesprüht wird.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:

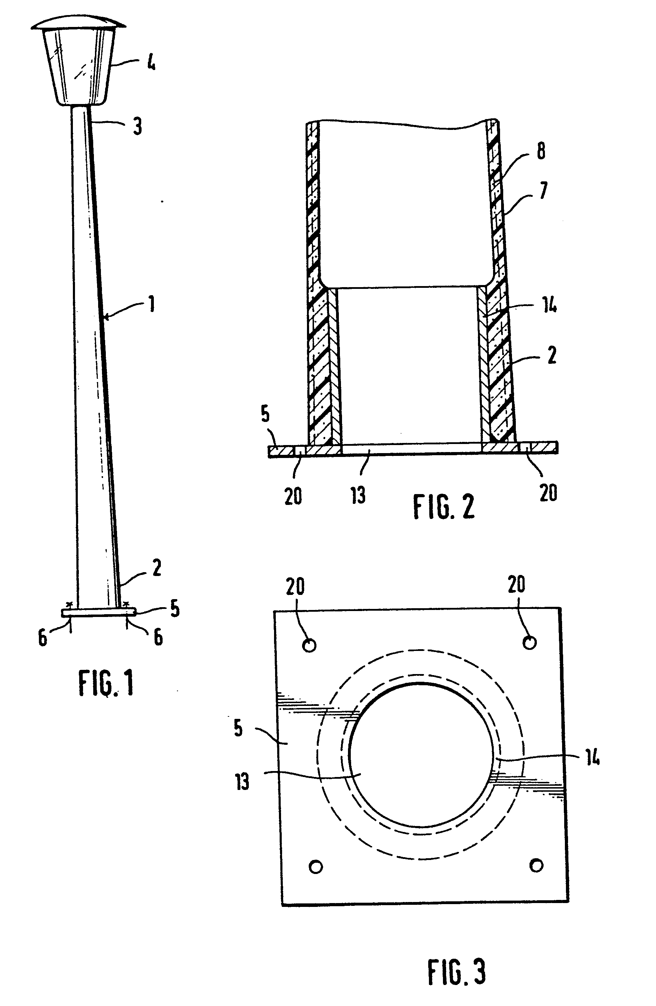

Fig. 1 einen eine Leuchte tragenden Mast mit der Befestigung dienender Fussplatte;

Fig. 2 den Mastfuss in vergrösserter Darstellung und

Fig. 3 von unten gesehen sowie

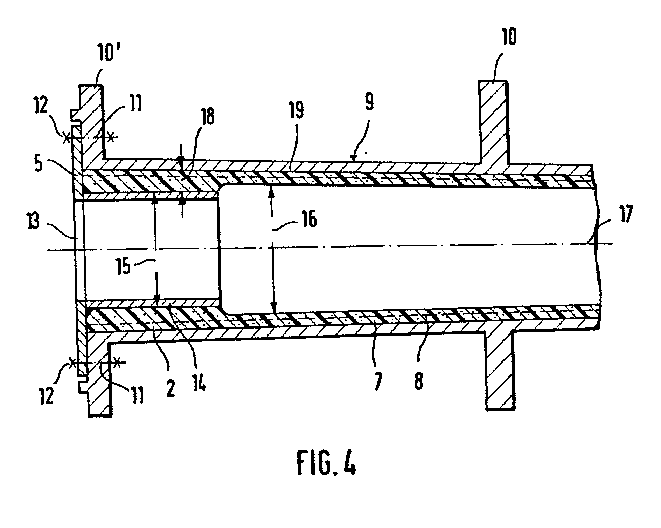

Fig. 4 in schematich vereinfachter Form die Herstellung eines solchen Mastes.

Der Mast 1 verläuft vom Mastfuss 2 zum Mastzopf 3, der eine Leuchte 4 trägt, konisch. Er weist unter dem Mastfuss 2 eine Fussplatte 5 auf, die in bekannter Weise mittels Schrauben 6 auf einem ortsfest vorgesehenen Sockel befestigt wird. In der Wandung 7 des Mastes 1 ist eine Armierung 8, beispielsweise aus Glasfaser, eingebracht, was beispielsweise nach einem einen anderen Vorschlag der Anmelderin entsprechenden Verfahren geschehen kann.

Bei dem zur Herstellung eines solchen Mastes dienenden Schleuderverfahren findet eine konische Schleuderform 9 Verwendung, die an ihrem Aussenumfang Laufringe 10 trägt, die, was im einzelnen nicht dargestellt ist, auf Rollen laufen und durch Rollen niedergehalten werden, wobei ein Teil der Stützrollen mit einem Antrieb verbunden ist. Der dem Mastfuss 2 am nächsten liegende Laufring 10' der Schleuderform 9 ist mit einer Anzahl von Bohrungen 11 versehen, die zur Aufnahme von Schraubenbolzen 12 dienen, welche die in der Fussplatte 5 vorgesehenen Bohrungen 20 durchsetzen. Hat die Fussplatte 5, wie in der Zeichnung wiedergegeben, eine mittige Öffnung 13, so kann die das Kunstharz in die Form 9 einführende Düse auch von der Fussseite des Mastes her angesetzt werden.

Auf der Fussplatte 5 ist ein Rohrstutzen 14 befestigt, im allgemeinen angeschweisst, dessen Aussendurchmesser 15 in Abstand geringer ist als der gedachte Innendurchmesser 16 des Mastfusses 2 bei normaler Wandstärke. Der Rohrstutzen 14 greift zentrisch in das fussseitige Ende der Schleuderform 9 ein.

Wird die Schleuderform 9 um ihre Achse 17 in Rotation versetzt, nachdem die Armierung eingebracht wurde, und Kunstharz vom Mastzopf und/oder Mastfuss, hier durch die Öffnung 13 der Fussplatte 5 in den Innenraum der Schleuderform eingesprüht, lagert sich das Kunstharz an die Formwandung an und baut dort eine entsprechende Wandstärke auf. Ein Teil des Kunstharzes wandert infolge der Konizität der Schleuderform 9 zu deren fussseitigem Ende hin und gelangt dort in den Zwischenraum 18 zwischen dem Rohrstutzen 14 und der Innenwand 19 der Schleuderform 9 und füllte diesen Zwischenraum 18 schliesslich voll aus, so dass sich eine sichere Verbindung zwischen dem Rohrstutzen 14 und damit der Fussplatte 5 einerseits und dem Mastfuss 2 ergibt.

Infolge der Schrumpfung beim Polymerisieren des Kunstharzes ist diese Verbindung unlösbar und jedenfalls sicherer als eine in herkömmlicher Weise durch nachträgliches Verkleben hergestellte.

## Patentanspruch

Schleuderverfahren zum Herstellen eines Mastes (1) aus armiertem Kunststoff in einer um ihre horizontale Achse drehbaren Form (9), an deren dem Mastfuss (2) entsprechenden Ende eine Fussplatte (5) mit einem koaxialen in die Form (9) eingreifenden Rohrstutzen (14) befestigt ist, dadurch gekennzeichnet, dass eine das Kunstharz in die Form (9) einsprühende Düse durch eine Öffnung (13) der Fussplatte (5) in die Form (9) eingeführt und ein Zwischenraum (18) zwischen dem Rohrstutzen (14) und der Forminnenwand (19) durch das eingesprühte Kunstharz ausgefüllt wird.

## Claim

Centrifugal process for the production of a pole (1) of reinforced plastics material in a mould (9) rotatable about its horizontal axis, there being fastened to the end of the mould corresponding to the foot (2) of the pole a footplate (5) with a tubular support (14) engaging coaxially within the mould (9), characterised in that a nozzle for spraying the synthetic resin into the mould (9) is introduced through an opening (13) of the footplate (5) and that an intermediate space (18) between the tubular support (14) and the inner wall (19) of the mould is filled by means of the sprayed-in synthetic resin.

## Revendication

Procédé de fabrication par moulage par rotation d'un poteau (1) en matière plastique armée dans un moule (9) mobile en rotation autour de son axe horizontal, un pied en forme de plaque (5) et un support tubulaire (14) pénétrant coaxialement à l'intérieur du moule (9) étant fixés à l'extrémité correspondante du pied du poteau, caractérisé en ce qu'une tuyère injectant la matière synthétique dans le moule (9) est introduite par une ouverture (13) du pied en forme de plaque (5) dans le moule (9) et que la matière synthétique injectée remplit un espace ménagé entre le support tubulaire (14) et la paroi intérieure du moule (19).

FIG. 1

FIG. 2

FIG. 3

FIG. 4